# EUROPÄISCHE PATENTSCHRIFT

(11) **EP 1 423 620 B1**
(45) Veröffentlichungstag und Bekanntmachung des Hinweises auf die Patenterteilung: **30.11.2005**
(21) Anmeldenummer: 02797572.1
(22) Anmeldetag: 08.08.2002
(51) Int. Cl.: F16B 37/04

(54) **BEFESTIGUNGSKLAMMER ZUR VERANKERUNG EINES BAUTEILS IN EINEM LOCH EINER TRÄGERPLATTE**
FIXING CLAMP FOR ANCHORING A COMPONENT IN THE HOLE OF A SUPPORT PLATE
PINCE DE FIXATION CONCUE POUR FIXER UN COMPOSANT DANS UN ORIFICE D'UNE PLAQUE DE SUPPORT

(30) Priorität: 30.08.2001 DE 10142528
(43) Veröffentlichungstag der Anmeldung: 02.06.2004
(73) Patentinhaber: A. Raymond & Cie, 38028 Grenoble (FR); Volkswagen AG, 38436 Wolfsburg (DE)
(72) Erfinder: HULLMANN, Klaus, 79540 Lörrach (DE); DE JONG, Michael, 79589 Binzen (DE); MAAS, Aschwin, 7586 AB Overdinkel (NL); KARG, Horst, 38442 Wolfsburg (DE); HABROM, Martin, 38448 Wolfsburg (DE)
(74) Vertreter: Rüttgers, Joachim
(86) Internationale Anmeldenummer: PCT/EP2002/008856
(87) Internationale Veröffentlichungsnummer: WO 2003/021112

(56) Entgegenhaltungen:
- FI-B- 97 163
- FR-A- 2 665 229
- US-A- 3 783 922

## Beschreibung

Die Erfindung bezieht sich auf eine Befestigungsklammer zur Verankerung eines Bauteils in einem Loch einer Trägerplatte, insbesondere zur Blindbefestigung eines Handgriffes am Dachhimmel eines Kraftfahrzeugs.

Derartige Befestigungsklammern sind beispielsweise aus der US-A-2 184 783 bekannt. Sie bestehen üblicherweise aus einem Verankerungsteil mit rechtwinklig nach außen abstehenden Anlagestreifen sowie aus mit einer Gewindeplatte verbundenen, einander gegenüberliegenden Spreizlappen, welche durch Eindrehen einer sich am Bauteil abstützenden Schraube in die Gewindeplatte derart nach außen aufspreizen, dass die Spreizlappen sich auf der Rückseite des Lochrandes abstützen.

Bei der Blindbefestigung eines Handgriffes am Dachhimmel eines Kraftfahrzeuges kommt es darauf an, dass der Handgriff mit der Befestigungsklammer zunächst am Formhimmel vormontiert und dann mit diesem zusammen komplett im oberen Querholm der Autokarosserie eingebaut werden kann. Hierzu sind die bekannten Befestigungsklammern weniger gut geeignet, weil diese nur zur direkten Befestigung im Loch einer Metallplatte konzipiert sind, nicht aber zur vorherigen Vormontage im Loch des vom Material her weicheren Formhimmels. Außerdem muss die Schraube zum Anziehen der Spreizlappen bis zur Abstützung am Lochrand relativ häufig gedreht werden, was den Werker bei der Montage des Haltegriffes entsprechend viel Zeit kostet.

Durch die **US-A-3,783,922** ist eine Befestigungsklammer der vorgenannten Art bekannt, bei der die Gewindeplatte als separates Teil ausgebildet und zwischen den Seitenwänden des Verankerungsteils wie in einem Käfig eingelagert und verschiebbar geführt ist, wobei die Spreizlappen aus den Seitenwänden des Verankerungsteils ausgestanzt sind. Femer ist an den freien Enden der Spreizlappen je ein Randstreifen als Auflage für die Gewindeplatte in den Käfigraum gebogen und derart schräg zu den Anlagestreifen gerichtet, dass die Randstreifen beim Anziehen der vormontierten Schraube von den Seitenkanten der niederfahrenden Gewindeplatte seitlich nach außen gedrückt und die Spreizlappen dadurch bis zur festen Abstützung am Lochrand angedrückt werden.

Bei dieser Klammer sind die Spreizlappen mit den Seitenwänden oberhalb der Anlagestreifen aufbiegbar verbunden. Außerdem sind die freien Enden der Spreizlappen nach außen gebogen und hintergreifen bereits im eingesetzten Zustand der Klammer den Lochrand der Halteplatte. Diese Befestigungsklammer funktioniert praktisch nach dem Dübel-Prinzip. Sie kann in das Befestigungsloch nur eingeführt werden, wenn die Spreizlappen vorher soweit zusammengedrückt werden, daß diese am Lochrand vorbeigehen. Bei dieser Ausbildung der Befestigungsklammer gestaltet sich die Vormontage in der Trägerplatte sehr umständlich und werden naturgemäß hohe Arbeitskosten verursacht.

Aufgabe der Erfindung ist es, die Vormontage des Handgriffes am Formhimmel sowie die anschließende Montage an der Autokarosserie durch entsprechende Änderung der Befestigungsklammer einfacher zu gestalten. Dies wird nach der vorliegenden Erfindung durch Ausbildung der Befestigungsklammer, die jener nach der US-A-3 783 922 gattungsgemäß ausgebildet ist, nach den Merkmalen des Anspruchs 1 erreicht. Hierbei sorgen die separate Gewindeplatte und die relativ kurze Bemessung der Spreizlappen dafür, dass nach nur wenigen Schraubendrehungen die Spreizlappen zur Seite gedrückt werden und sich dabei fest auf der Rückseite des Lochrands abstützen.

Durch die weitere Ausgestaltung der Befestigungsklammer nach Anspruch 2 und 3 wird die Einlagerung der Gewindeplatte im Verankerungsteil optimal gelöst und vor allem eine problemlose saubere Führung der Gewindeplatte in den Seitenwänden erreicht.

In der Zeichnung ist ein Ausführungsbeispiel der Erfindung dargestellt und soll nachfolgend näher erläutert werden. Es zeigt:

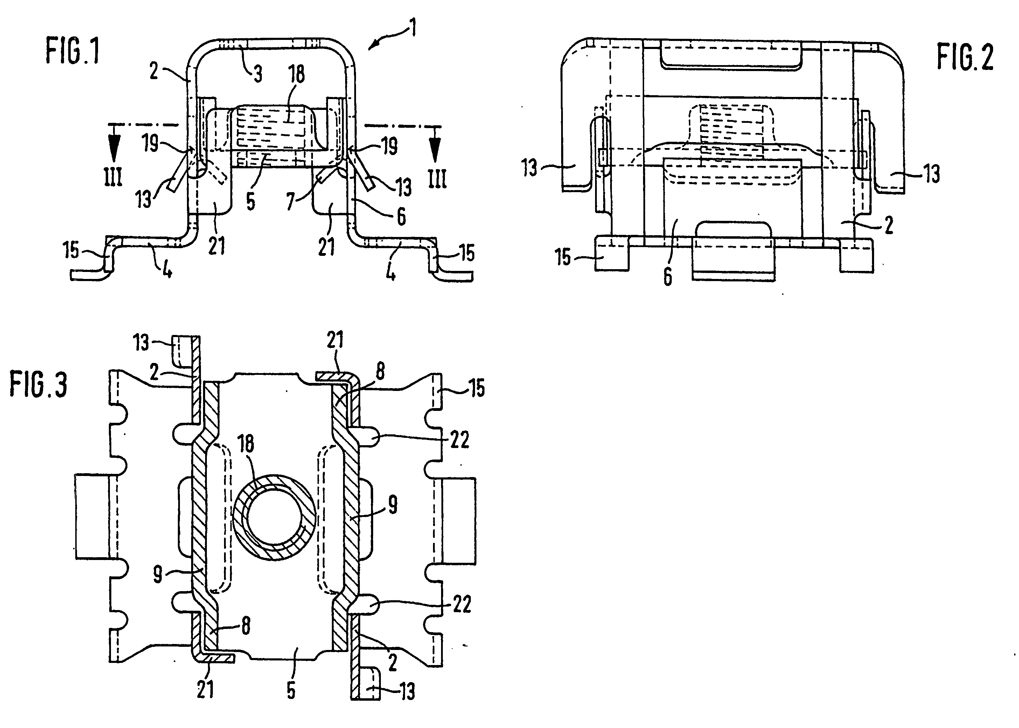

- Fig. 1: Eine aus Verankerungsteil und Gewindeplatte zusammengesetzte Befestigungsklammer in Vorderansicht,
- Fig. 2: eine Seitenansicht hierzu,
- Fig. 3: die Klammer in Draufsicht mit Schnitt durch die Gewindeplatte gemäß Linie III - III in Figur 1,
- Fig. 4: die zusammengesetzte Befestigungsklammer in perspektivischer Ansicht,
- Fig. 5: das Montagebild einer im Formhimmel und Trägerplatte vormontierten Befestigungsklammer mit eingedrehter Befestigungsschraube und
- Fig. 6: das gleiche Montagebild nach dem Anziehen der Befestigungsschraube und Aufspreizen der Spreizlappen.

Die in den Figuren dargestellte Befestigungsklammer dient zur Verankerung eines Bauteils in einem Loch **10** einer Trägerplatte **12**. Die Klammer besteht im wesentlichen aus einem U-förmig ausgebildeten Verankerungsteil **1** mit zwei Seitenwänden **2,** einer oberen Querwand **3** und am unteren Ende der Seitenwände rechtwinklig nach außen abstehenden Anlagestreifen **4** sowie aus einer separaten Gewindeplatte **5,** welche zwischen den Seitenwänden **2** sowie an deren entgegengesetzt gegenüberliegenden Endkanten nach innen abgewinkelten Querlappen **21** wie in einem Käfig eingelagert und verschiebbar geführt ist.

Aus den einander gegenüberliegenden Seitenwänden **2** sind Spreizlappen **6** ausgestanzt, welche am Übergang von den Seitenwänden **2** zu den Anlagestreifen **4** mit letzteren aufbiegbar verbunden sind. An den freien Enden der Spreizlappen **6** sind je ein Randstreifen **7** schräg zu den Anlagesteifen **4** gerichtet in den Käfigraum gebogen, welche als Auflage für die eingelagerte Gewindeplatte **5** dienen.

Die Gewindeplatte **5** kann zwar als massive Platte ausgeführt sein. Zur Materialerspamis ist es jedoch zweckmäßiger, wenn an einer relativ dünnen Gewindeplatte **5** mittig eine Gewindehülse **18** und zwei Seitenwände **8** rechtwinklig angeformt sind, welche zwischen den Seitenwänden **2** des Verankerungsteils **1** verschiebbar geführt sind. Die Seitenwände **8** der Gewindeplatte **5** sind hierbei entsprechend der Breite des Freischnitts in den Seitenwänden **2** nach außen abgesetzt und ragen mit den abgesetzten Wandteilen **9** in den freigeschnittenen Bereich **22** der Seitenwände **2** oberhalb der Spreizlappen **6** hinein, so dass die abgesetzten Wandteile **9** in dem freigeschnittenen Bereich **22** zwischen den Seitenwänden **2** verschiebbar geführt sind.

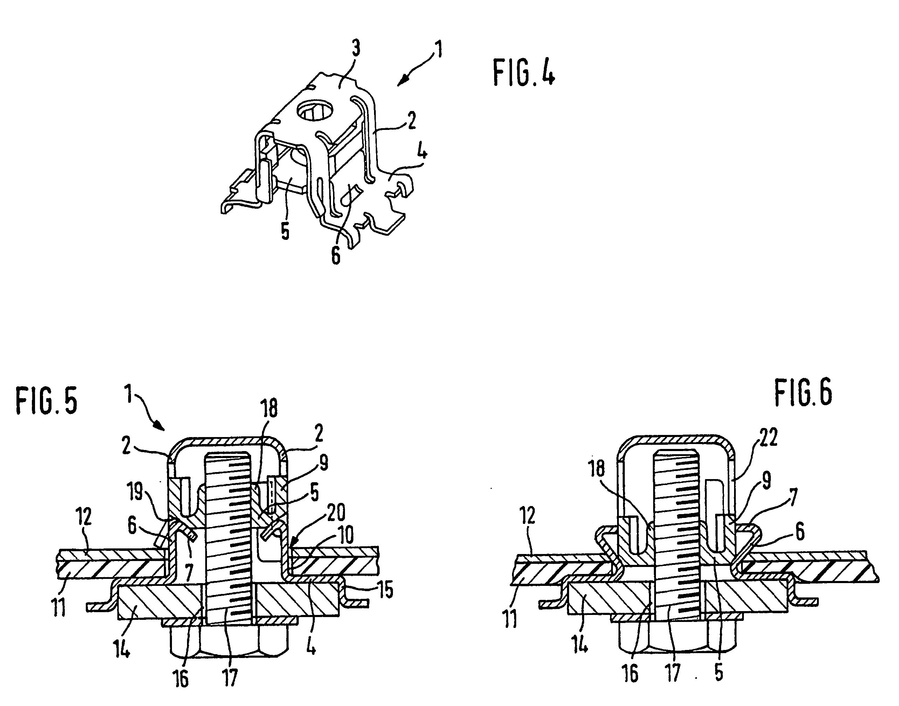

Aus den **Figuren 5 und 6** ist der Montageablauf beim bestimmungsgemäßen Einsatz der Befestigungsklammer beispielsweise bei der Blindbefestigung eines Handgriffes am Dachhimmel einer Kraftfahrzeugkarosserie dargestellt. Die Befestigungsklammer wird zunächst bei **Figur 5** in das etwa rechteckige Loch **10** im Formhimmel **11** sowie in das gleich ausgeformte Loch in der Trägerplatte **12** des Dachhimmels eingeführt bis zur Anlage der Anlagestreifen **4** am Formhimmel **11,** wobei an den Seitenwänden **2** nach außen abstehende Spreizfinger **13** dafür sorgen, dass die Befestigungsklammer auf der Rückseite der Trägerplatte **12** fixiert bleibt.

Von dem am Dachhimmel zu befestigenden Handgriff ist lediglich die Halteplatte **14** dargestellt, die zwischen vier von den Anlagestreifen **4** rechtwinklig hochstehenden Begrenzungslappen **15** eingebettet ist. Durch ein in die Halteplatte **14** eingebohrtes Loch **16** wird eine Befestigungsschraube **17** durchgeführt und in die Gewindehülse **18** der Gewindeplatte **5** soweit eingedreht, bis die Gewindeplatte **5** mit Ihren angefassten Seitenkanten **19** lose auf den Randstreifen **7** der Spreizlappen **6** aufliegt. Durch die Spreizfinger **13** ist es auch möglich, die Befestigungsklammer zusammen mit der Halteplatte **14** des Handgriffs und der eingedrehten Schraube **17** zunächst im Rechteckloch **10** des Formhimmels **11** vorzumontieren und erst bei der Fertigmontage in das Rechteckloch **10** in der Trägerplatte **12** einzudrücken.

In **Figur 6** ist die Schraube **17** soweit angezogen, dass die von der Gewindeplatte **5** seitlich weggedrückten Randsteifen **7** sich an den beiden Seitenwänden **8** der Gewindeplatte **5** abstützen, während die Spreizlappen 6 von den angefassten Seitenkanten **19** der Gewindeplatte **5** fest gegen den Lochrand **20** des Befestigungsloches **10** angedrückt werden. Das etwas weichere Material des Formhimmels **11** wird dabei gleichzeitig etwas zusammengedrückt.

Will man einen beispielsweise defekten Handgriff auswechseln, so verbleibt das Verankerungsteil **1** nach dem Herausdrehen der Schraube **17** und Abnehmen der Halteplatte **14** im Loch **10** der Trägerplatte **12** und kann anschließend zum erneuten Festschrauben eines anderen Handgriffes wieder verwendet werden.

### Bezugszeichenliste

- 1: Verankerungsteil
- 2: Seitenwände
- 3: Querwand
- 4: Anlagestreifen
- 5: Gewindeplatte
- 6: Spreizlappen
- 7: Randstreifen
- 8: Seitenwände
- 9: Abgesetzte Wandteile
- 10: Befestigungsloch
- 11: Formhimmel
- 12: Trägerplatte
- 13: Spreizfinger
- 14: Halteplatte
- 15: Begrenzungslappen
- 16: Loch
- 17: Befestigungsschraube
- 18: Gewindehülse
- 19: Angefasste Seitenkanten
- 20: Lochrand
- 21: Querlappen
- 22: Freigeschnittener Bereich

## Patentansprüche

1. Befestigungsklammer zur Verankerung eines Bauteils in einem Loch (10) einer Trägerplatte (12), bestehend aus einem in das Loch (10) einsteckbaren Verankerungsteil (1) mit rechtwinklig nach außen abstehenden Anlagestreifen (4) sowie aus mit einer Gewindeplatte (5) verbundenen, einander gegenüberliegenden Spreizlappen (6), welche durch Eindrehen einer sich an einer Halteplatte (14) des Bauteils abstützenden Schraube (17) in die Gewindeplatte (5) derart nach außen aufspreizen, daß die Lappen (6) sich auf der Rückseite des Lochrandes (20) abstützen; wobei die Gewindeplatte (5) als separates Teil ausgebildet und zwischen den Seitenwänden (2) des Verankerungsteils (1) wie in einem Käfig eingelagert und verschiebbar geführt ist, wobei die Spreizlappen (6) aus den Seitenwänden (2) des Verankerungsteils (1) ausgestanzt sind und wobei an den freien Enden der Spreizlappen (6) je ein Randstreifen (7) als Auflage für die Gewindeplatte (5) in den Käfigraum gebogen und derart schräg zu den Anlagestreifen (4) gerichtet ist, daß die Randstreifen (7) beim Anziehen der vormontierten Schraube (17) von den Seitenkanten (19) der niederfahrenden Gewindeplatte (5) seitlich nach außen gedrückt und die Spreizlappen (6) **dadurch** bis zur festen Abstützung am Lochrand (20) angedrückt werden, **dadurch gekennzeichnet, dass** die Spreizlappen (6) am Übergang von den Seitenwänden (2) des Verankerungsteils (1) zu den Anlagestreifen (4) mit letzteren aufbiegbar verbunden sind.

2. Befestigungsklammer nach Anspruch 1, **dadurch gekennzeichnet, dass** an der Gewindeplatte (5) zwei Seitenwände (8) angeformt sind, welche zwischen den Seitenwänden (2) des Verankerungsteils (11) verschiebbar geführt sind.

3. Befestigungsklammer nach Anspruch 2, **dadurch gekennzeichnet, dass** die Seitenwände (8) der Gewindeplatte (5) entsprechend der Breite des Freischnitts in den Seitenwänden (2) des Verankerungsteils (1) nach außen abgesetzt sind und mit diesen abgesetzten Wandteilen (9) in den freigeschnittenen Bereich der Seitenwände (2) oberhalb der Spreizlappen (6) hineinragt.

## Claims

1. Fixing clamp for anchoring a component in a hole (10) in a support plate (12) comprising an anchoring member (1) insertable into the hole (10) with contact strips (4) extending perpendicularly outwardly, and spreading flaps (6) linked to a threaded plate (5) and lying mutually opposed, which spreading flaps are spread outwardly by turning a screw (17), which rests against a retaining plate (14) of the component, into the threaded plate (5) in a manner such that the flaps (6) rest against the rear side of the hole edge (20); whereby the threaded plate (5) is designed as a separate part and is accommodated between the side walls (2) of the anchoring member (1) as in a cage and is displaceably guided, whereby the spreading flaps (6) are stamped out of the side walls (2) of the anchoring member (1) and whereby at the free ends of each spreading flap (6) an edge strip (7) is bent into the cage space as a support for the threaded plate (5) and is directed inclined to the contact strips (4) such that, on tightening the premounted screw (17), the edge strips (7) are pressed outwardly laterally by the side edges (19) of the pulled down threaded plate (5) and the spreading flaps (6) are thereby pushed down until they rest firmly against the hole edge (20), **characterised in that**, at the transition from the side walls (2) of the anchoring member (1) to the contact strips (4), the spreading flaps (6) are connected to the contact strips (4) such that they are able to be bent up.

2. Fixing clamp according to claim 1, **characterised in that** two side walls (8) are formed on the threaded plate (5), said side walls being displaceably guided between the side walls (2) of the anchoring member (11).

3. Fixing clamp according to claim 2, **characterised in that** the side walls (8) of the threaded plate (5) are stepped outwardly corresponding to the width of the cut-out in the side walls (2) of the anchoring member (1) and with these stepped wall portions (9), extend into the cut-out regions of the side walls (2) above the spreading flaps (6).

## Revendications

1. Agrafe de fixation pour l'ancrage d'un élément de construction dans un trou (10) ménagé dans une plaque formant support (12), se composant d'un élément d'ancrage (1) destiné à être emmanché dans le trou (10), comportant des bandelettes d'appui (4) faisant saillie vers l'extérieur suivant une disposition en angle droit, ainsi que de pattes expansibles (6) se faisant respectivement face, reliées à une plaque formant filetage (5) qui, sous l'effet du vissage d'une vis (17) prenant appui sur une plaque support (14) de l'élément de construction, s'écartent vers l'extérieur dans une proportion telle que les pattes expansibles (6) viennent prendre appui sur la face arrière du bord du trou (20) ; la plaque formant filetage (5) étant en l'occurrence encastrée comme dans une cage entre les parois latérales (2) de l'élément d'ancrage (1) et disposée déplaçable en translation, les pattes expansibles (6) étant en l'occurrence réalisées par découpage à la presse dans les parois latérales (2) de l'élément d'ancrage (1) et une bandelette de rive (7), destinée à servir d'appui pour la plaque formant filetage (5) à l'intérieur de l'emprise de la cage, étant respectivement prévue au niveau des extrémités libres des pattes expansibles (6) suivant une disposition recourbée et orientée suivant de manière oblique par rapport aux bandelettes d'appui (4) dans une proportion telle que les bandelettes de rive (7) sont, lors du serrage de la vis (17) préalablement montée, latéralement comprimées vers l'extérieur par les arêtes latérales (19) de la plaque formant filetage (5) lors de son mouvement de descente et que, de ce fait, les pattes expansibles (6) sont appliquées contre le bord du trou (20) jusqu'à ce qu'elles soient solidement en appui contre celui-ci, **caractérisée en ce que** les pattes expansibles (6) sont, dans la zone de transition entre les parois latérales (2) et les bandelettes d'appui (4), raccordées à ces dernières avec la possibilité de s'écarter par flexion.

2. Agrafe de fixation selon la revendication 1, **caractérisée en ce que** deux parois latérales (8) sont réalisées solidaires par formage de la plaque formant filetage (5), parois qui sont disposées déplaçables en translation entre les parois latérales (2) de l'élément d'ancrage (11).

3. Agrafe de fixation selon la revendication 2, **caractérisée en ce que** les parois latérales (8) de la plaque formant filetage (5) sont décalées vers l'extérieur conformément à la largeur de la dépouille réalisée dans les parois latérales (2) de l'élément d'ancrage (1) et font saillie, au niveau des portions de paroi décalées (9), dans la zone de dépouille des parois latérales (2) au-dessus des pattes expansibles (6).
